# FASCICULE DE BREVET EUROPEEN

(11) **EP 2 448 793 B1**
(45) Date de publication et mention de la délivrance du brevet: **26.02.2014**
(21) Numéro de dépôt: 10745294.8
(22) Date de dépôt: 22.06.2010
(51) Int. Cl.: B60L 11/18, H01M 2/10, B60K 1/04, B60S 5/06

(54) **PROCEDE ET SYSTEME DE REMPLACEMENT D'UN CONTENEUR D'ENERGIE D'ALIMENTATION D'UN MOTEUR D'ENTRAINEMENT D'UN VEHICULE AUTOMOBILE**
VERFAHREN UND SYSTEM FÜR DEN ERSATZ EINES ENERGIECONTAINERS FÜR DIE STROMVERSORGUNG EINES ANTRIEBSMOTORS EINES FAHRZEUGES
METHOD AND SYSTEM FOR REPLACING AN ENERGY CONTAINER SUPPLYING POWER TO A DRIVING ENGINE OF AN AUTOMOBILE

(30) Priorité: 03.07.2009 FR 0954582
(43) Date de publication de la demande: 09.05.2012
(73) Titulaire: Renault S.A.S., 92100 Boulogne-Billancourt (FR)
(72) Inventeur: ESCANDE, Bruno, F-78790 Septeuil (FR)
(86) Numéro de dépôt international: PCT/FR2010/051268
(87) Numéro de publication internationale: WO 2011/001066

(56) Documents cités:
- DE-A1- 4 229 687
- DE-B1- 2 241 548
- DE-B1- 2 558 637
- FR-A1- 2 685 547
- FR-A1- 2 696 139
- GB-A- 2 277 067
- US-A- 5 612 606
- US-A- 5 998 963

## Description

La présente invention se rapporte à un procédé de remplacement d'un conteneur d'énergie d'alimentation d'un moteur d'entraînement d'un véhicule automobile.

Certains véhicules automobiles, comme les véhicules électriques ou hybrides, comprennent un conteneur d'énergie d'alimentation d'un moteur d'entraînement, comme une batterie électrique d'alimentation d'un moteur électrique. Il peut se révéler intéressant d'échanger ce conteneur lorsque son niveau d'énergie est faible contre un nouveau conteneur rempli d'énergie. Ceci peut être fait dans une station similaire à une station service dans laquelle on peut remplir un réservoir d'essence d'un véhicule automobile.

On connaît du document US 5 612 606 une station d'échange de batterie électrique d'alimentation d'un moteur d'entraînement d'un véhicule électrique et un procédé pour réaliser un tel échange. Dans la station d'échange décrite, le conducteur positionne approximativement le véhicule dans un rail, contre une butée longitudinale par rapport aux équipements de la station. Par la suite, dans des phases plus ou moins automatiques, des moyens mobiles de dépose de la batterie électrique et d'assemblage de la nouvelle batterie au véhicule viennent se positionner relativement au véhicule grâce à des capteurs. La quantité de capteurs et moyens électroniques nécessaires au fonctionnement d'une telle station la rend difficilement fiable et implique que son fonctionnement est peu robuste.

Pour un déploiement aisé des stations d'échange de conteneur d'énergie (nécessitant peu de compétence technologique), il est nécessaire de rendre fiable et robuste le fonctionnement de ces stations.

DE-A-2558637 montre le préambule de la revendication 1.

Ainsi, le but de l'invention est de fournir un procédé de remplacement de conteneurs remédiant aux inconvénients mentionnés précédemment et améliorant les procédés de remplacement connus de l'art antérieur. En particulier, l'invention propose un procédé de remplacement de conteneurs d'énergie simple, fiable et robuste. L'invention concerne encore un système de remplacement de conteneurs d'énergie. L'invention concerne encore une station de remplacement muni d'un tel système de remplacement.

Selon l'invention, le procédé de remplacement d'un conteneur d'énergie d'alimentation d'un moteur d'entraînement d'un véhicule automobile reposant sur un sol et comprenant un axe longitudinal, un axe transversal et un axe vertical, le procédé de remplacement comprenant une première étape de positionnement du véhicule automobile par rapport au sol en l'absence d'action d'un moteur d'entraînement du véhicule automobile, est caractérisé en ce qu'il comprend une étape d'annulation des contraintes de liaison liant le conteneur d'énergie au véhicule automobile.

Ladite étape d'annulation des contraintes de liaison comprend un verrouillage de moyens de reprise d'efforts verticaux appliqués sur le conteneur d'énergie et une amenée en contact d'une palette avec le conteneur d'énergie, ladite palette étant positionnée préalablement sous le conteneur d'énergie du véhicule automobile.

Ledit verrouillage de moyens de reprise d'efforts verticaux comprend la rotation d'un élément amovible, apte à reprendre les efforts verticaux exercés par des actionneurs, de sorte à ce que l'assiette du véhicule automobile ne soit pas modifiée.

La première étape de positionnement peut comprendre :
- un positionnement du véhicule automobile par rapport au sol selon l'axe longitudinal, et/ou
- un positionnement du véhicule automobile par rapport au sol autour de l'axe vertical.

Le procédé de remplacement peut comprendre une deuxième étape de positionnement d'un système de remplacement d'un conteneur d'énergie d'alimentation d'un moteur d'entraînement d'un véhicule automobile par rapport au véhicule automobile.

La deuxième étape de positionnement peut comprendre :
- un positionnement du système de remplacement par rapport au véhicule automobile selon l'axe transversal.

Le procédé de remplacement peut comprendre une troisième étape de positionnement de précision du véhicule automobile par rapport au sol en l'absence d'action d'un moteur d'entraînement du véhicule automobile.

La troisième étape de positionnement peut comprendre :
- un positionnement du véhicule automobile par rapport au sol selon l'axe longitudinal, et/ou
- un positionnement du véhicule automobile par rapport au sol autour de l'axe vertical,
par coopération de moyens de positionnement.

Le procédé de remplacement peut comprendre une quatrième étape de positionnement de la caisse du véhicule automobile par rapport au sol.

La quatrième étape de positionnement peut comprendre :
- un positionnement de la caisse du véhicule automobile par rapport au sol selon l'axe vertical, et/ou
- un positionnement de la caisse du véhicule automobile par rapport au sol autour de l'axe longitudinal, et/ou
- un positionnement de la caisse du véhicule automobile par rapport au sol autour de l'axe transversal.

Le procédé de remplacement peut comprendre une cinquième étape de prise en compte du conteneur d'énergie par le système de remplacement.

Ladite étape d'annulation des contraintes de liaison peut être réalisée après ladite cinquième étape de prise en compte du conteneur d'énergie par le système de remplacement.

Selon l'invention, le système de remplacement d'un conteneur d'énergie d'alimentation d'un moteur d'entraînement d'un véhicule automobile est caractérisé en ce qu'il comprend des moyens matériels et/ou logiciels de mise en oeuvre du procédé de remplacement défini précédemment.

Selon l'invention, la station de remplacement d'un conteneur d'énergie d'alimentation d'un moteur d'entraînement d'un véhicule automobile est caractérisée en ce qu'elle comprend un système de remplacement défini précédemment.

Les dessins annexés représentent, à titre d'exemple, deux modes de réalisation d'un système de remplacement de conteneurs d'énergie selon l'invention.
La figure 1 est une vue de côté schématique d'un mode de réalisation d'un système de remplacement de conteneurs d'énergie selon l'invention.
La figures 2 et 3 sont des vues de dessus schématiques d'un mode de réalisation d'un système de remplacement de conteneurs selon l'invention.
La figure 4 est une vue de détail schématique d'un dispositif de positionnement d'un véhicule automobile.
La figure 5 est une vue de côté schématique du premier mode de réalisation d'un système de remplacement de conteneurs d'énergie, un véhicule étant positionné verticalement grâce à ce système.
Les figures 6 et 7 sont des vues schématiques d'un moyen de localisation d'un véhicule automobile.
La figure 8 est une vue de côté schématique du premier mode de réalisation d'un système de remplacement de conteneurs d'énergie, un conteneur d'énergie du véhicule étant pris en compte par le système de remplacement.
Les figures 9 à 11 sont des vues arrière schématiques du premier mode de réalisation d'un système de remplacement de conteneurs d'énergie, lors d'une étape d'annulation des contraintes permettant de lier le conteneur au véhicule.
La figure 12 est une vue schématique d'un moyen de localisation du véhicule automobile, ce moyen de localisation assurant également une autre fonction.
La figure 13 est une vue de côté schématique d'un deuxième mode de réalisation d'un système de remplacement de conteneurs d'énergie, un véhicule se trouvant au niveau de ce système.
La figure 14 est une vue de détail de dessus schématique du deuxième mode de réalisation du système de remplacement de conteneurs selon l'invention.
Les figures 15 à 18 sont des vues de côté schématiques du deuxième mode de réalisation d'un système de remplacement de conteneurs d'énergie, un véhicule se trouvant dans différentes situations au niveau de ce système.

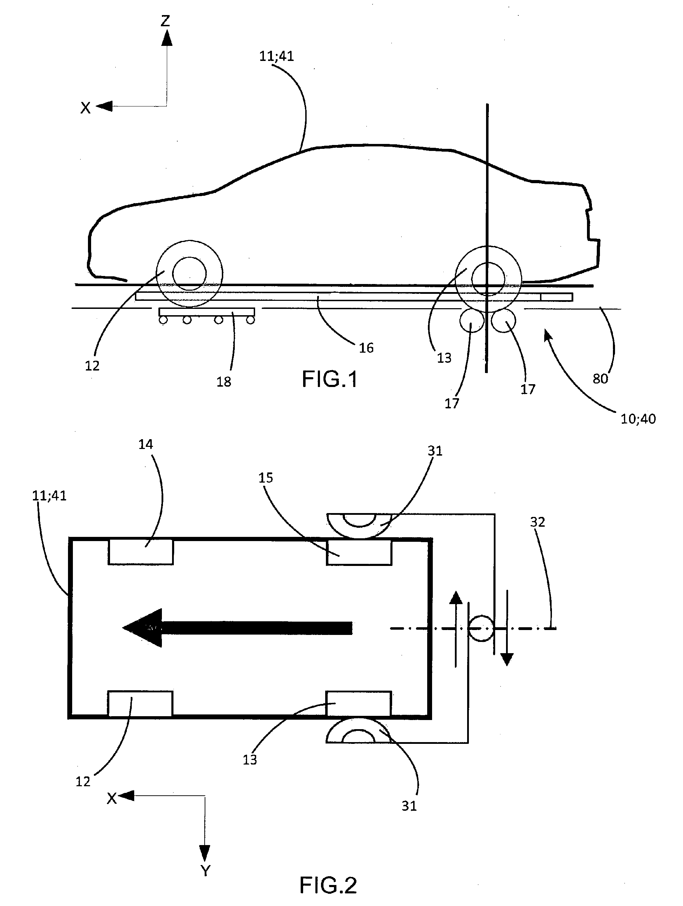

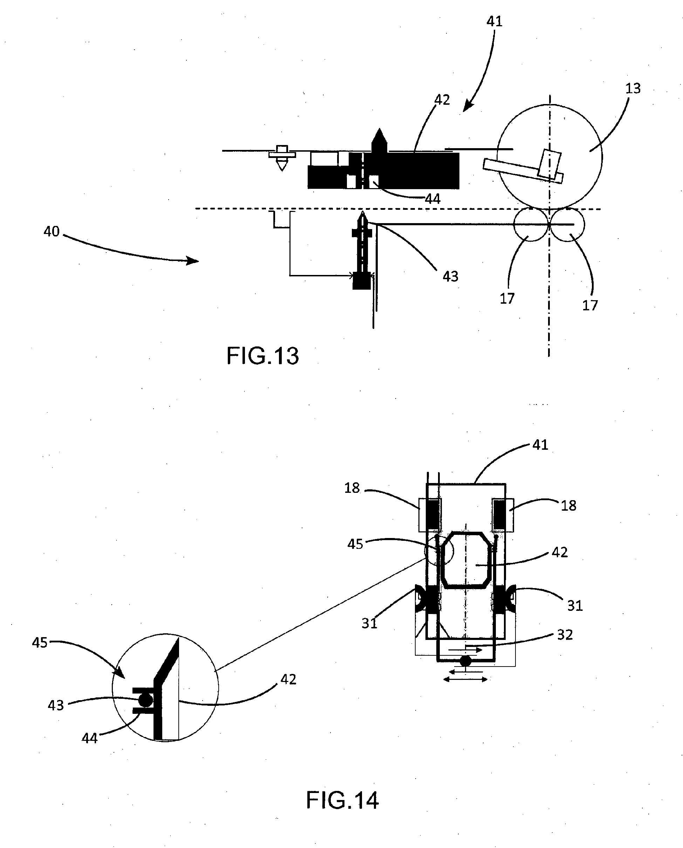

Les figures 1 à 11 représentent un premier véhicule 11 en situation sur un premier mode de réalisation d'un système 10 de remplacement de conteneurs d'énergie 20 et les figures 13 à 18 représentent un deuxième véhicule 41 en situation sur un deuxième mode de réalisation d'un système 40 de remplacement de conteneurs d'énergie 42.

Le premier véhicule diffère du deuxième véhicule par l'implantation du conteneur d'énergie alimentant son moteur d'entraînement, sur le premier véhicule, il est implanté dans le coffre arrière et sur le deuxième véhicule, il est implanté sous le châssis. De préférence, dans les deux cas, le conteneur d'énergie est une batterie électrique d'alimentation d'un moteur électrique d'entraînement du véhicule. Dans la suite de la description, on décrit le remplacement d'un conteneur d'énergie au travers de la description du remplacement d'une batterie d'alimentation électrique d'un moteur d'entraînement d'un véhicule.

Sur les figures, les axes habituels du véhicule sont représentés. L'axe longitudinal du véhicule est noté X, l'axe transversal du véhicule est noté Y et l'axe vertical du véhicule est noté Z.

Avant d'être positionné sur le premier mode de réalisation du système 10 de remplacement de batteries, le véhicule se déplace sur un sol 80 grâce à l'action de son moteur d'entraînement. Afin de positionner au mieux le véhicule par rapport au système de remplacement de batteries, le système de remplacement peut comprendre un rail 16 formé par exemple par deux profilés métalliques distants destinés à guider les roues avant 12 et arrière 13 du côté conducteur ou passager du véhicule. Ainsi, le conducteur conduit le véhicule pour positionner ces roues dans le rail et ce jusqu'à ce que les roues arrière du véhicule viennent se positionner entre deux rouleaux 17 du système de remplacement disposés perpendiculairement au rail. Dans cette position, les roues avant reposent chacune sur un plateau à billes 18 ou collectivement sur un plateau à billes, ce ou ces plateaux faisant partie du système de remplacement.

Une fois le véhicule dans cette position, on libère la rotation des rouleaux 17 et la rotation des billes des plateaux 18. Ceci permet de positionner le véhicule par rapport au sol 80 ou par rapport à un référentiel géocentrique selon l'axe longitudinal X et de positionner le véhicule en rotation par rapport au sol 80 ou par rapport à un référentiel géocentrique autour de l'axe vertical Z.

Une fois les billes des plateaux 18 libérées, ceux-ci peuvent se déplacer librement perpendiculairement au rail 16 ou à la fois perpendiculairement et parallèlement au rail 16.

La rotation des billes et des rouleaux est bloquée lors des phases où le véhicule arrive sur le système de remplacement ou quitte le système de remplacement, le véhicule étant alors entraîné par l'action de son moteur.

Comme représenté à la figure 2, le système de remplacement de batteries comprend également un dispositif de palpage de la position du véhicule automobile selon l'axe transversal Y du véhicule. Ce dispositif de palpage comprend par exemple deux moyens de palpage 31 venant en appui contre les faces latérales du véhicule, par exemple en appui contre les deux faces latérales des roues du train arrière du véhicule. Ainsi, grâce aux données fournies par les moyens de palpage et, plus généralement par le moyen de palpage, un axe 32 du système de remplacement de batteries peut être positionné par rapport au véhicule.

Ce positionnement est important car il permet la bonne exécution des étapes ultérieures de positionnement du véhicule et de démontage de la batterie. Ce positionnement permet par exemple de localiser le véhicule à plus ou moins 15 mm par rapport au sol.

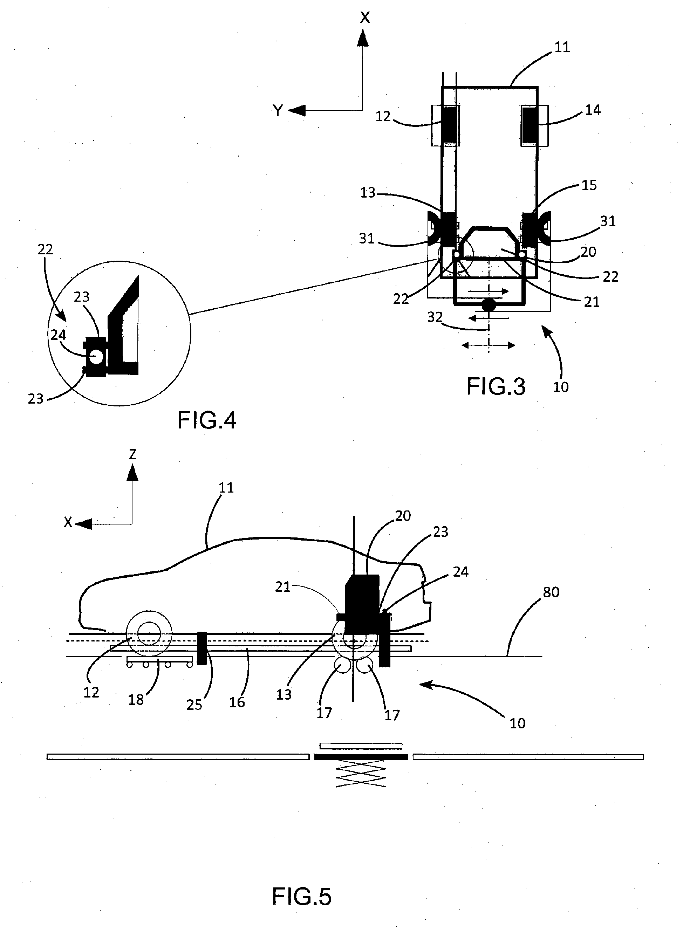

En effet, une fois le système de remplacement de batteries positionné par rapport au véhicule grâce à l'étape précédente, des premiers moyens de positionnement 24 faisant partie du système de remplacement de batteries sont déplacés pour venir coopérer avec des deuxièmes moyens de positionnement 23 prévus sur le véhicule, par exemple prévu sur un cadre 21 entourant la batterie 20. Les premiers moyens de positionnement 24 et les deuxièmes moyens de positionnement 23 constituent un premier dispositif de positionnement 22. Les premiers moyens de positionnement sont par exemple des pilotes et les deuxièmes moyens de positionnement sont par exemple des oreilles, des barreaux s'étendant depuis la caisse du véhicule ou des trous. Comme représenté aux figures 3 à 7, les premiers moyens de positionnement coopèrent de préférence avec les deuxièmes moyens de positionnement par introduction des premiers moyens dans les deuxièmes moyens ou par introduction des deuxièmes moyens dans les premiers moyens.

La coopération des premiers et des deuxièmes moyens de positionnement permet d'affiner la mise en position du véhicule par rapport au sol et par rapport au système de remplacement de batterie, en particulier selon l'axe longitudinal X du véhicule et en rotation autour de l'axe vertical Z du véhicule.

En outre, comme représenté à la figure 5, des appuis 25 du système de remplacement de batteries viennent agir sur la caisse du véhicule en avant de celui-ci. Ces appuis ont pour fonction de soulever la caisse du véhicule en avant de celui-ci. Une fonction similaire est assurée par la coopération des premiers et deuxièmes moyens de positionnement. Ainsi, la caisse du véhicule peut être mise en position par rapport au sol et au système de remplacement de batteries selon l'axe vertical Z du véhicule, mais aussi être mis en position par rapport au sol et au système de remplacement de batteries en rotation autour des axes X et Y du véhicule. Autrement dit, le véhicule est amené dans une assiette déterminée.

Ce positionnement et cette mise en assiette permettent par exemple de localiser le véhicule à plus ou moins 1 mm par rapport au sol et par rapport au système de remplacement de batterie.

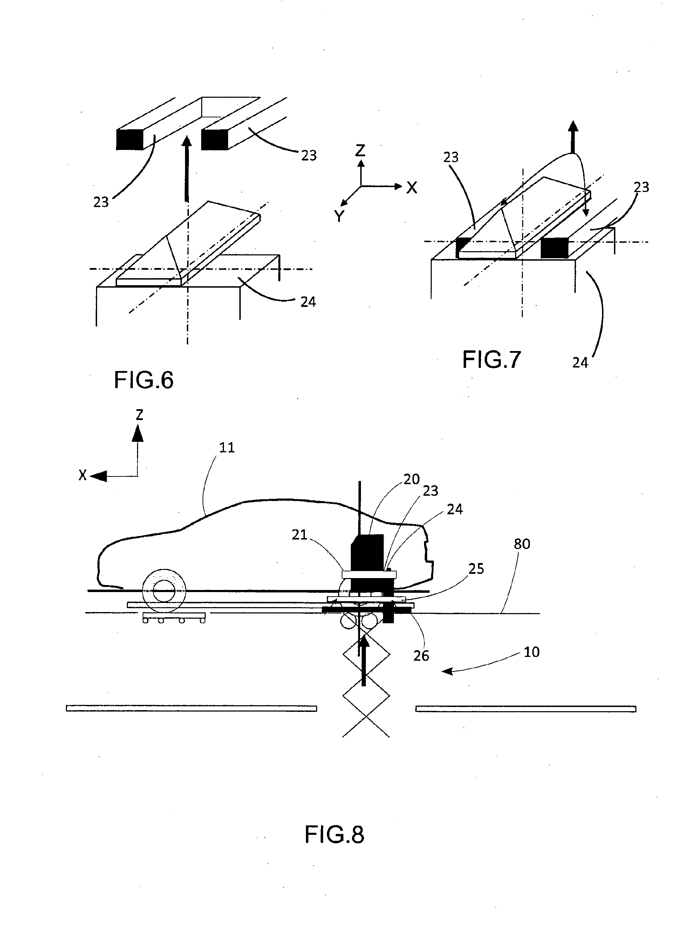

Comme représenté la figure 8, une fois le véhicule dans cette position, une palette 25 est positionnée sous la batterie par exemple grâce à une table élévatrice 26, c'est-à-dire que la batterie fixée au véhicule est prise en compte par le système de remplacement de batterie.

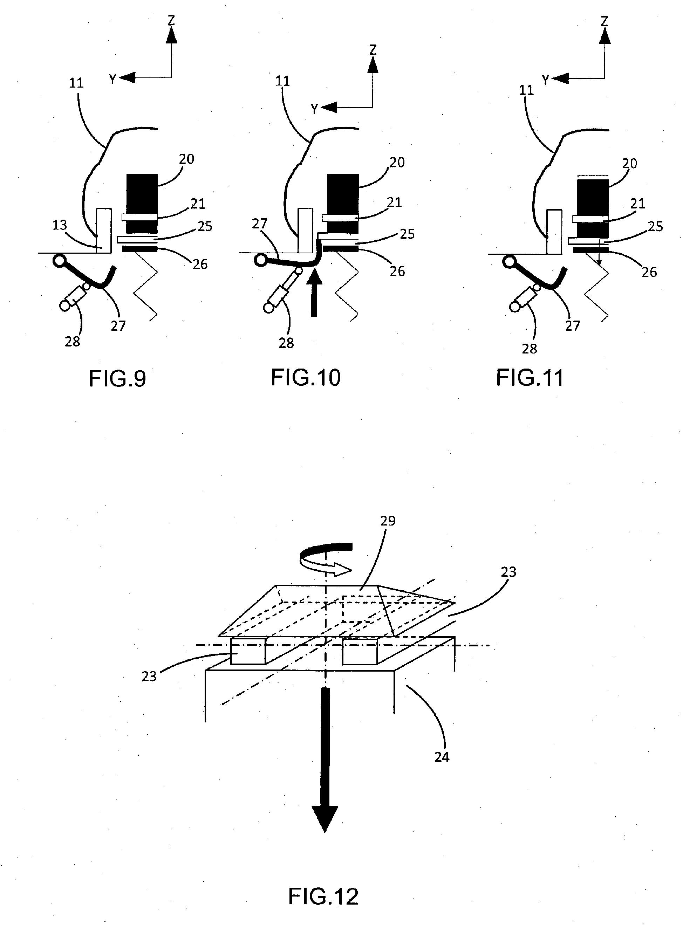

Comme représenté aux figures 9 à 11, des actionneurs 27, 28 du système de remplacement de batteries agissent sur la palette pour que celle-ci exerce une action verticale dirigée vers le haut sur la batterie afin que le système de remplacement puisse annuler les contraintes de liaison permettant de maintenir la batterie sur le véhicule. Une fois ces contraintes annulées, la batterie repose sur la palette, celle-ci étant soutenue par les actionneurs 27, 28. Dans une étape ultérieure, les actionneurs déposent l'ensemble palette-batterie sur la table élévatrice 26 qui peut alors évacuer la batterie.

Pour éviter que l'action verticale dirigée vers le haut ne modifie la position du véhicule ou son assiette, les premiers moyens de positionnement peuvent comprendre un élément amovible 29 permettant de reprendre l'action verticale exercée par les actionneurs 27, 28. Comme représenté à la figure 12, cet élément amovible 29 peut consister en un barreau 29 mobile en rotation autour de l'axe du premier moyen de positionnement entre une première position « verrouillée » dans laquelle le premier moyen de positionnement ne peut plus sortir du deuxième moyen de positionnement verticalement et une deuxième position « déverrouillée » dans laquelle le premier moyen de positionnement peut sortir du deuxième moyen de positionnement verticalement.

Un tel mécanisme d'annulation de contraintes et de reprise d'efforts a donc pour effet principal de maintenir l'assiette du véhicule lors du procédé de remplacement. Ce maintien de l'assiette s'avère particulièrement avantageux et permet d'optimiser le procédé de remplacement en termes notamment de sécurité, fiabilité et répétabilité.

Un deuxième mode de réalisation du système de remplacement est décrit ci-après en référence aux figures 13 à 18. Avant d'être positionné sur le deuxième mode de réalisation du système de remplacement de batteries, le véhicule 41 se déplace sur un sol 80 grâce à l'action de son moteur d'entraînement. Comme dans le premier mode de réalisation, afin de positionner au mieux le véhicule par rapport au système de remplacement de batteries, le système de remplacement peut comprendre un rail 16 formé par exemple par deux profilés métalliques distants destinés à guider les roues avant 12 et arrière 13 du côté conducteur ou passager du véhicule. Ainsi, le conducteur conduit le véhicule pour positionner ces roues dans le rail et ce jusqu'à ce que les roues arrière du véhicule viennent se positionner entre deux rouleaux 17 du système de remplacement disposés perpendiculairement au rail. Dans cette position, les roues avant reposent chacune sur un plateau à billes 18 ou collectivement sur un plateau à billes, ce ou ces plateaux faisant partie du système de remplacement.

Une fois le véhicule dans cette position, on libère la rotation des rouleaux 17 et la rotation des billes des plateaux 18. Ceci permet de positionner le véhicule longitudinalement par rapport au sol 80 ou par rapport à un référentiel géocentrique selon l'axe longitudinal X et de positionner le véhicule en rotation par rapport au sol 80 ou par rapport à un référentiel géocentrique autour de l'axe vertical Z.

Une fois les billes des plateaux 18 libérées, ceux-ci peuvent se déplacer librement perpendiculairement au rail 16 ou à la fois perpendiculairement et parallèlement au rail 16.

Comme représenté à la figure 2, le système de remplacement de batteries comprend également un dispositif de palpage de la position du véhicule automobile par rapport au sol 80 ou à un référentiel géocentrique selon l'axe transversal Y du véhicule. Ce dispositif de palpage comprend par exemple deux moyens de palpage 31 venant en appui contre les faces latérales du véhicule, par exemple en appui contre les deux faces latérales des roues du train arrière du véhicule. Ainsi, grâce aux données fournies par les moyens de palpage et, plus généralement par le moyen de palpage, un axe 32 du système de remplacement de batteries peut être positionné par rapport au véhicule.

Ce positionnement est important car il permet la bonne exécution des étapes ultérieures de positionnement du véhicule et de démontage de la batterie. Ce positionnement permet par exemple de localiser le véhicule à plus ou moins 15 mm par rapport au sol.

En effet, une fois le système de remplacement de batteries positionné par rapport au véhicule grâce à l'étape précédente, des premiers moyens de positionnement 43 faisant partie du système de remplacement de batteries sont déplacés pour venir coopérer avec des deuxièmes moyens de positionnement 44 prévus sur le véhicule, en particulier sur la batterie du véhicule. Les premiers moyens de positionnement 43 et les deuxièmes moyens de positionnement 44 constituent un premier dispositif de positionnement 45. Les premiers moyens de positionnement sont par exemple des pilotes et les deuxièmes moyens de positionnement sont par exemple des oreilles, des barreaux dépassant de la batterie ou des trous. Comme représenté aux figures 14 à 16, les premiers moyens de positionnement coopèrent de préférence avec les deuxièmes moyens de positionnement par introduction des premiers moyens dans les deuxièmes moyens ou par introduction des deuxièmes moyens dans les premiers moyens.

La coopération des premiers et des deuxièmes moyens de positionnement permet d'affiner la mise en position du véhicule par rapport au sol et par rapport au système de remplacement de batterie, en particulier selon l'axe longitudinal X du véhicule et en rotation autour de l'axe vertical Z du véhicule.

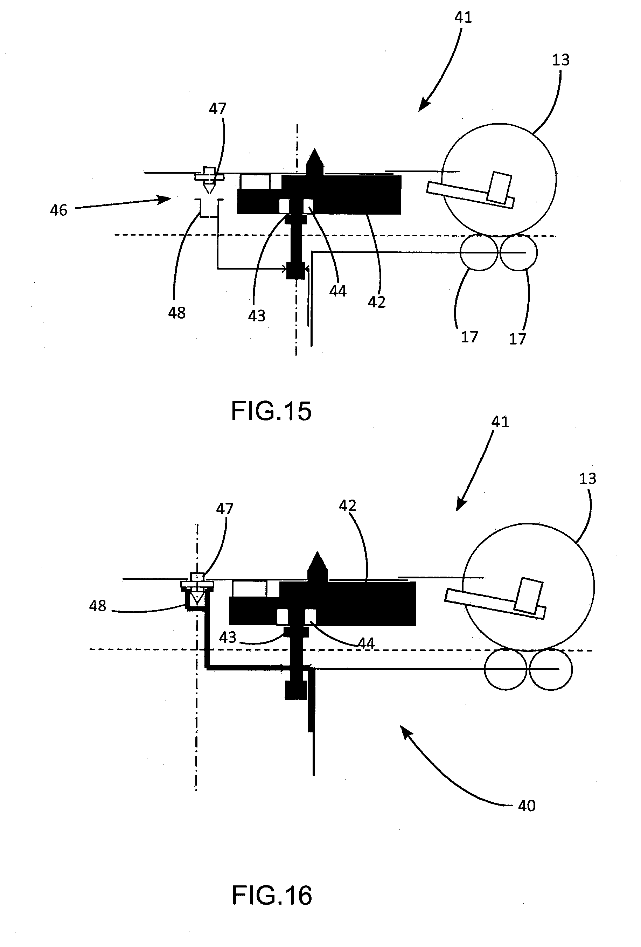

Une fois que les premiers et deuxièmes moyens de positionnement coopèrent, des troisièmes moyens de positionnement 48 faisant parti du système de remplacement de batteries sont déplacés pour venir coopérer avec des quatrièmes moyens de positionnement 47 prévus sur la caisse du véhicule. Les troisièmes moyens de positionnement 48 et les quatrièmes moyens de positionnement 47 constituent un deuxième dispositif de positionnement 46. Les quatrièmes moyens de positionnement sont par exemple des pilotes et les troisièmes moyens de positionnement sont par exemple des oreilles ou des trous. Comme représenté aux figures 15 et 16, les troisièmes moyens de positionnement coopèrent de préférence avec les quatrièmes moyens de positionnement par introduction des quatrièmes moyens dans les troisièmes moyens ou par introduction des troisièmes moyens dans les quatrièmes moyens.

La coopération des troisièmes et des quatrièmes moyens de positionnement permet d'affiner la mise en position du véhicule par rapport au sol et par rapport au système de remplacement de batterie, en particulier selon l'axe longitudinal X du véhicule et en rotation autour de l'axe vertical Z du véhicule.

Le deuxième dispositif de positionnement permet de positionner plus finement le véhicule que ne le fait le premier dispositif.

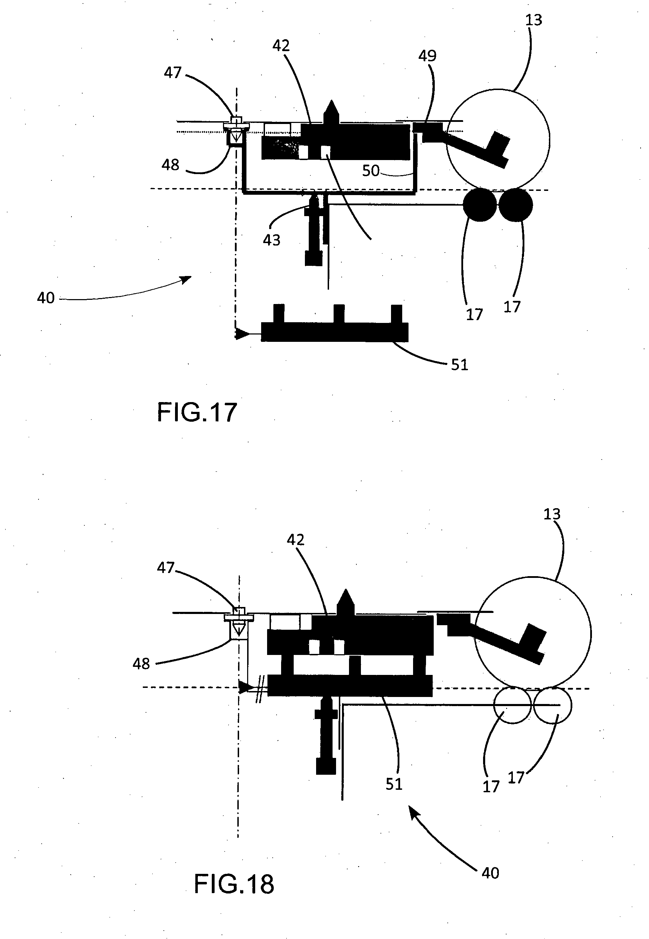

Une fois que les troisièmes et quatrièmes moyens de positionnement du deuxième dispositif de positionnement coopèrent, il peut être mis fin à la coopération des premiers et deuxièmes moyens de positionnement du premier dispositif de positionnement, comme représenté à la figure 17.

En outre, le deuxième dispositif de positionnement permet d'agir sur la caisse du véhicule par exemple en avant de la batterie et le système de remplacement comprend un ou plusieurs arbres 50 permettant d'agir également sur la caisse du véhicule au niveau d'une portée 49 par exemple en arrière de la batterie. Ces actions ont pour fonction de soulever la caisse du véhicule. Ainsi, la caisse du véhicule peut être mise en position par rapport au sol et au système de remplacement de batteries selon l'axe vertical Z du véhicule, mais aussi être mise en position par rapport au sol et au système de remplacement de batteries en rotation autour des axes X et Y du véhicule. Autrement dit, le véhicule est amené dans une assiette déterminée.

Ce positionnement et cette mise en assiette permettent par exemple de localiser le véhicule à plus ou moins 1 mm par rapport au sol et par rapport au système de remplacement de batterie.

Comme représenté la figure 18, une fois le véhicule dans cette position, une palette 51 est positionnée sous la batterie par exemple grâce à une table élévatrice (non représentée), c'est-à-dire que la batterie fixée au véhicule est prise en compte parle système de remplacement de batterie.

La batterie peut ensuite être déposée comme décrit précédemment en référence aux figures 9 à 11. Plus particulièrement, un mécanisme d'annulation de contraintes et de reprise d'efforts est mis en oeuvre de sorte à maintenir l'assiette du véhicule lors du remplacement de la batterie (figures 9 à 11).

Le système de remplacement objet d'invention comprend évidemment outre les moyens matériels décrits précédemment des moyens logiciels permettant aux moyens matériels d'agir en séquence pour mettre en oeuvre le procédé de remplacement objet de l'invention. Les moyens logiciels peuvent notamment comprendre des programmes d'ordinateur.

## Revendications

1. Procédé de remplacement d'un conteneur (20 ; 42) d'énergie d'alimentation d'un moteur d'entraînement d'un véhicule automobile (11 ; 41) reposant sur un sol et comprenant un axe longitudinal (X), un axe transversal (Y) et un axe vertical (Z), le procédé de remplacement comprenant une première étape de positionnement du véhicule automobile par rapport au sol (80) en l'absence d'action d'un moteur d'entraînement du véhicule automobile et comprenant une étape d'annulation des contraintes de liaison liant le conteneur d'énergie au véhicule automobile,
ladite étape d'annulation des contraintes de liaison comprenant un verrouillage de moyens (29) de reprise d'efforts verticaux appliqués sur le conteneur d'énergie et une amenée en contact d'une palette (25 ; 51) avec le conteneur d'énergie, ladite palette (25 ; 51) étant positionnée préalablement sous le conteneur d'énergie du véhicule automobile, **caractérisé en ce que**
ledit verrouillage de moyens de reprise d'efforts verticaux comprent la rotation d'un élément amovible (29), apte à reprendre les efforts verticaux exercés par des actionneurs (27, 28), de sorte à ce que l'assiette du véhicule automobile ne soit pas modifiée.

2. Procédé de remplacement selon l'une des revendications précédentes, **caractérisé en ce que** la première étape de positionnement comprend :
- un positionnement du véhicule automobile par rapport au sol selon l'axe longitudinal, et/ou
- un positionnement du véhicule automobile par rapport au sol autour de l'axe vertical.

3. Procédé de remplacement selon l'une des revendications précédentes, **caractérisé en ce qu'**il comprend une deuxième étape de positionnement d'un système (10 ; 40) de remplacement d'un conteneur d'énergie d'alimentation d'un moteur d'entraînement d'un véhicule automobile par rapport au véhicule automobile.

4. Procédé de remplacement selon la revendication 3, **caractérisé en ce que** la deuxième étape de positionnement comprend :
- un positionnement du système de remplacement par rapport au véhicule automobile selon l'axe transversal.

5. Procédé de remplacement selon l'une des revendications précédentes, **caractérisé en ce qu'**il comprend une troisième étape de positionnement de précision du véhicule automobile par rapport au sol en l'absence d'action d'un moteur d'entraînement du véhicule automobile.

6. Procédé de remplacement selon la revendication 5, **caractérisé en ce que** la troisième étape de positionnement comprend :
- un positionnement du véhicule automobile par rapport au sol selon l'axe longitudinal, et/ou
- un positionnement du véhicule automobile par rapport au sol autour de l'axe vertical,
par coopération de moyens (23, 24 ; 43, 44, 47, 48) de positionnement.

7. Procédé de remplacement selon l'une des revendications précédentes, **caractérisé en ce qu'**il comprend une quatrième étape de positionnement de la caisse du véhicule automobile par rapport au sol.

8. Procédé de remplacement selon la revendication 7, **caractérisé en ce que** la quatrième étape de positionnement comprend :
- un positionnement de la caisse du véhicule automobile par rapport au sol selon l'axe vertical, et/ou
- un positionnement de la caisse du véhicule automobile par rapport au sol autour de l'axe longitudinal, et/ou
- un positionnement de la caisse du véhicule automobile par rapport au sol autour de l'axe transversal.

9. Procédé de remplacement selon l'une des revendications précédentes, **caractérisé en ce qu'**il comprend une cinquième étape de prise en compte du conteneur d'énergie par le système de remplacement.

10. Procédé de remplacement selon la revendication précédente, **caractérisé en ce que** ladite étape d'annulation des contraintes de liaison est réalisée après ladite cinquième étape de prise en compte du conteneur d'énergie par le système de remplacement.

11. Système (10 ; 40) de remplacement d'un conteneur (20 ; 42) d'énergie d'alimentation d'un moteur d'entraînement d'un véhicule automobile (11 ; 41), **caractérisé en ce qu'**il comprend des moyens matériels (17, 18, 31, 32, 22, 25, 26, 27, 28, 29 ; 17, 18, 31, 45, 46, 51) et/ou logiciels de mise en oeuvre du procédé de remplacement selon l'une des revendications précédentes.

12. Station de remplacement d'un conteneur d'énergie d'alimentation d'un moteur d'entraînement d'un véhicule automobile, **caractérisée en ce qu'**elle comprend un système de remplacement selon l'une des revendications précédentes.

## Patentansprüche

1. Verfahren zum Auswechseln eines Versorgungsenergiebehälters (20; 42) eines Antriebsmotors eines Kraftfahrzeugs (11; 41), das auf einem Boden ruht und eine Längsachse (X), eine Querachse (Y) und eine senkrechte Achse (Z) hat, wobei das Auswechselverfahren einen ersten Schritt der Positionierung des Kraftfahrzeugs bezüglich des Bodens (80) ohne Einwirkung eines Antriebsmotors des Kraftfahrzeugs und einen Schritt der Aufhebung der den Energiebehälter mit dem Kraftfahrzeug verbindenden Verbindungsbeanspruchungen enthält,
wobei der Schritt der Aufhebung der Verbindungsbeanspruchungen eine Verriegelung von Einrichtungen (29) zur Aufnahme von auf den Energiebehälter angewendeten senkrechten Kräften und ein Inkontaktbringen einer Palette (25; 51) mit dem Energiebehälter enthält, wobei die Palette (25; 51) vorher unter dem Energiebehälter des Kraftfahrzeugs positioniert wird, **dadurch gekennzeichnet, dass**
die Verriegelung von Einrichtungen zur Aufnahme senkrechter Kräfte die Drehung eines entfernbaren Elements (29) enthält, das die von Stellantrieben (27, 28) ausgeübten senkrechten Kräfte aufnehmen kann, damit die Trimmlage des Kraftfahrzeugs nicht verändert wird.

2. Auswechselverfahren nach dem vorhergehenden Anspruch, **dadurch gekennzeichnet, dass** der erste Positionierungsschritt enthält:
- eine Positionierung des Kraftfahrzeugs bezüglich des Bodens gemäß der Längsachse, und/oder
- eine Positionierung des Kraftfahrzeugs bezüglich des Bodens um die senkrechte Achse.

3. Auswechselverfahren nach einem der vorhergehenden Ansprüche, **dadurch gekennzeichnet, dass** es einen zweiten Schritt der Positionierung eines Auswechselsystems (10; 40) eines Versorgungsenergiebehälters eines Antriebsmotors eines Kraftfahrzeugs bezüglich des Kraftfahrzeugs enthält.

4. Auswechselverfahren nach Anspruch 3, **dadurch gekennzeichnet, dass** der zweite Positionierungsschritt enthält:
- eine Positionierung des Auswechselsystems bezüglich des Kraftfahrzeugs gemäß der Querachse.

5. Auswechselverfahren nach einem der vorhergehenden Ansprüche, **dadurch gekennzeichnet, dass** es einen dritten Schritt der Präzisionspositionierung des Kraftfahrzeugs bezüglich des Bodens ohne Einwirkung eines Antriebsmotors des Kraftfahrzeugs enthält.

6. Auswechselverfahren nach Anspruch 5, **dadurch gekennzeichnet, dass** der dritte Positionierungsschritt enthält:
- eine Positionierung des Kraftfahrzeugs bezüglich des Bodens gemäß der Längsachse, und/oder
- eine Positionierung des Kraftfahrzeugs bezüglich des Bodens um die senkrechte Achse, durch Zusammenwirkung von Positioniereinrichtungen (23, 24; 43, 44, 47, 48).

7. Auswechselverfahren nach einem der vorhergehenden Ansprüche, **dadurch gekennzeichnet, dass** es einen vierten Schritt der Positionierung des Wagenaufbaus des Kraftfahrzeugs bezüglich des Bodens enthält.

8. Auswechselverfahren nach Anspruch 7, **dadurch gekennzeichnet, dass** der vierte Positionierungsschritt enthält:
- eine Positionierung des Wagenaufbaus des Kraftfahrzeugs bezüglich des Bodens gemäß der senkrechten Achse, und/oder
- eine Positionierung des Wagenaufbaus des Kraftfahrzeugs bezüglich des Bodens um die Längsachse, und/oder
- eine Positionierung des Wagenaufbaus des Kraftfahrzeugs bezüglich des Bodens um die Querachse.

9. Auswechselverfahren nach einem der vorhergehenden Ansprüche, **dadurch gekennzeichnet, dass** es einen fünften Schritt der Erfassung des Energiebehälters durch das Auswechselsystem enthält.

10. Auswechselverfahren nach dem vorhergehenden Anspruch, **dadurch gekennzeichnet, dass** der Schritt der Aufhebung der Verbindungsbeanspruchungen nach dem fünften Schritt der Erfassung des Energiebehälters durch das Auswechselsystem durchgeführt wird.

11. System (10; 40) zum Auswechseln eines Versorgungsenergiebehälters (20; 42) eines Antriebsmotors eines Kraftfahrzeugs (11; 41), **dadurch gekennzeichnet, dass** es Hardware- (17, 18, 31, 32, 22, 25, 26, 27, 28, 29; 17, 18, 31, 45, 46, 51) und/oder Softwareeinrichtungen zur Durchführung des Auswechselverfahrens nach einem der vorhergehenden Ansprüche enthält.

12. Auswechselstation eines Versorgungsenergiebehälters eines Antriebsmotors eines Kraftfahrzeugs, **dadurch gekennzeichnet, dass** sie ein Auswechselsystem nach dem vorhergehenden Anspruch enthält.

## Claims

1. Method for replacing a container (20; 42) of energy for powering a motor for driving a motor vehicle (11; 41) resting on a floor and comprising a longitudinal axis (X), a transverse axis (Y) and a vertical axis (Z), the replacement method comprising a first step of positioning the motor vehicle relative to the floor (80) in the absence of action of a motor for driving the motor vehicle and comprising a step of withdrawing the constraining linkage elements linking the energy container to the motor vehicle,
said step of withdrawing the constraining linkage elements comprising a locking of means (29) for absorbing vertical forces applied to the energy container and bringing a pallet (25; 51) into contact with the energy container, said pallet (25; 51) being previously positioned under the energy container of the motor vehicle, **characterized in that** said locking of means for absorbing vertical forces comprises the rotation of a removable element (29), capable of absorbing the vertical forces exerted by actuators (27, 28),
so that the attitude of the motor vehicle is not modified.

2. Replacement method according to the preceding claim, **characterized in that** the first positioning step comprises:
- positioning the motor vehicle relative to the floor along the longitudinal axis, and/or
- positioning the motor vehicle relative to the floor about the vertical axis.

3. Replacement method according to either of the preceding claims, **characterized in that** it comprises a second step of positioning a system (10; 40) for replacing an energy container for powering a motor for driving a motor vehicle relative to the motor vehicle.

4. Replacement method according to Claim 3, **characterized in that** the second positioning step comprises:
- positioning the replacement system relative to the motor vehicle along the transverse axis.

5. Replacement method according to one of the preceding claims, **characterized in that** it comprises a third step of precise positioning of the motor vehicle relative to the floor in the absence of action of a motor for driving the motor vehicle.

6. Replacement method according to Claim 5, **characterized in that** the third positioning step comprises:
- positioning the motor vehicle relative to the floor along the longitudinal axis, and/or
- positioning the motor vehicle relative to the floor about the vertical axis,
by interaction of positioning means (23, 24; 43, 44, 47, 48).

7. Replacement method according to one of the preceding claims, **characterized in that** it comprises a fourth step of positioning the body of the motor vehicle relative to the floor.

8. Replacement method according to Claim 7, **characterized in that** the fourth positioning step comprises:
- positioning the body of the motor vehicle relative to the floor along the vertical axis, and/or
- positioning the body of the motor vehicle relative to the floor about the longitudinal axis, and/or
- positioning the body of the motor vehicle relative to the floor about the transverse axis.

9. Replacement method according to one of the preceding claims, **characterized in that** it comprises a fifth step of the energy container being taken over by the replacement system.

10. Replacement method according to the preceding claim, **characterized in that** said step of withdrawing the constraining linkage elements is carried out after said fifth step of the energy container being taken over by the replacement system.

11. System (10; 40) for replacing an energy container (20; 42) for powering a motor for driving a motor vehicle (11; 41), **characterized in that** it comprises hardware means (17, 18, 31, 32, 22, 25, 26, 27, 28, 29; 17, 18, 31, 45, 46, 51) and/or software means for applying the replacement method according to one of the preceding claims.

12. Station for replacing an energy container for powering a motor for driving a motor vehicle, **characterized in that** it comprises a replacement system according to the preceding claim.
